# NOUVEAU FASCICULE DE BREVET EUROPEEN

(11) **EP 2 787 868 B2**
(45) Date de publication et mention de la décision concernant l'opposition: **09.10.2019**
(45) Mention de la délivrance du brevet: 15.02.2017
(21) Numéro de dépôt: 12810330.6
(22) Date de dépôt: 03.12.2012
(51) Int. Cl.: A47J 27/21, A47J 31/54, F24H 1/00

(54) **DISPOSITIF DE CHAUFFAGE POUR AMENER DU LIQUIDE A L'EBULLITION ET APPAREIL DE PREPARATION DE BOISSON COMPORTANT UN TEL DISPOSITIF**
ERWÄRMUNGSVORRICHTUNG ZUM KOCHEN EINER FLÜSSIGKEIT UND GETRÄNKEHERSTELLUNGSVORRICHTUNG MIT EINER SOLCHEN VORRICHTUNG
HEATING DEVICE FOR BRINGING LIQUID TO THE BOIL AND BEVERAGE PREPARATION APPARATUS COMPRISING SUCH A DEVICE

(30) Priorité: 07.12.2011 FR 1161256
(43) Date de publication de la demande: 15.10.2014
(73) Titulaire: SEB S.A., 69130 Ecully (FR)
(72) Inventeur: GUEGAN, Laurent, F-74150 Lornay (FR)
(74) Mandataire: Bourrières, Patrice
(86) Numéro de dépôt international: PCT/FR2012/052783
(87) Numéro de publication internationale: WO 2013/083904

(56) Documents cités:
- EP-A1- 2 191 752
- WO-A1-02/29336
- WO-A1-2012/076787
- FR-A1- 2 968 183
- US-A1- 2007 056 994
- US-A1- 2010 221 394

## Description

La présente invention se rapporte au domaine technique général des dispositifs de chauffage pour amener à l'ébullition un liquide comportant une chambre de chauffe alimentée en liquide à partir d'un réservoir par une pompe et un circuit de distribution du liquide, disposé directement en sortie de la chambre de chauffe, le circuit de distribution étant alimenté en liquide par la chambre de chauffe.

Le document EP2968183A1 décrit un appareil similaire à celui de l'invention.

Il est connu, du brevet JP 2000-060729, un appareil de préparation de boisson comportant une chambre de chauffe alimentée en liquide à partir d'un réservoir par une pompe mettant le liquide sous pression, et un circuit de distribution du liquide, disposé en sortie de la chambre de chauffe et alimenté en liquide par la chambre de chauffe par un conduit.

Un tel appareil présente l'avantage de permettre la réalisation d'une boisson nécessitant un liquide proche de sa température d'ébullition.

Cependant, un tel appareil présente l'inconvénient de ne pas permettre la distribution de la totalité du liquide déjà contenu dans le circuit de distribution du liquide. En effet, une partie du circuit de distribution de liquide n'est pas purgée et le liquide stagne dans le circuit de distribution et reste pour le cycle de chauffe suivant. Ainsi, le début de distribution de liquide fournit à l'utilisateur un mélange d'eau à température ambiante contenue dans l'appareil, et plus particulièrement dans le circuit de distribution, et d'eau chauffée à ébullition par la chambre de chauffe.

Aussi, un but de la présente invention est de proposer un appareil de préparation de boisson remédiant à cet inconvénient et permettant notamment de récupérer la totalité de l'eau chauffée en fin de cycle, laissant l'appareil, et tout particulièrement le circuit de distribution de l'appareil, purgé de tout liquide.

A cet effet, l'invention a pour objet un dispositif de chauffage selon la revendication 1.

Le circuit de distribution complètement vidangé du liquide en fin de distribution du liquide présente l'avantage de permettre la distribution d'un liquide à température plus élevée et plus particulièrement plus proche de l'ébullition. En effet, la fin de cycle est tout particulièrement favorable à la fourniture de liquide très chaud. De plus, l'extraction jusqu'à la dernière quantité du liquide chauffé, excepté le liquide contenu dans la chambre de chauffe, permet de mieux préparer le dispositif au cycle de chauffe suivant.

De plus, un tel circuit de distribution présente l'avantage de réduire les risques de stockage d'eau stagnante et de prévenir des risques de développement microbiologique.

Par ailleurs, un tel circuit de distribution présente l'avantage d'optimiser l'utilisation de l'énergie amenée au dispositif et de diminuer les pertes thermiques par de l'eau chauffée puis laissée à se refroidir par les déperditions thermiques naturelles.

Selon une autre caractéristique de l'invention, le déversement est fait par gravité.

Selon l'invention, le circuit de distribution est disposé au-dessus de la chambre de chauffe.

Selon une autre caractéristique de l'invention, la chambre de chauffe comporte une enveloppe sur laquelle sont rapportés des moyens de chauffe.

Selon une autre caractéristique de l'invention, l'enveloppe est cylindrique et présente un axe longitudinal.

Selon une autre caractéristique de l'invention, l'enveloppe est disposée verticalement suivant son axe longitudinal.

Selon une autre caractéristique de l'invention, l'enveloppe externe comprend une surface interne et une surface externe et les moyens de chauffe sont rapportés sur la surface externe de l'enveloppe.

Selon une autre caractéristique de l'invention, les moyens de chauffe comportent une piste sérigraphiée.

Selon une autre caractéristique de l'invention, le circuit de distribution comporte des moyens d'échappement de la vapeur produite au cours de l'ébullition du liquide.

Selon une autre caractéristique de l'invention, les moyens d'échappement sont disposés au-dessus de la chambre de chauffe. Selon l'invention, le circuit de distribution comporte des moyens de retour du liquide et/ou de la vapeur, produite au cours de l'ébullition du liquide, vers le réservoir.

Selon une autre caractéristique de l'invention, l'écoulement du liquide par les moyens de retour se fait par gravité.

Selon une autre caractéristique qui ne fait pas partie de l'invention, le circuit de distribution comprend une cavité centrale intégrée à la chambre de chauffe.

Par intégrée à la chambre de chauffe, on entend disposée dans le volume de la chambre de chauffe. Une telle caractéristique présente l'avantage de limiter le refroidissement du liquide lors de son écoulement dans le circuit de distribution, ce dernier se trouvant en grande partie intégré dans la chambre de chauffe.

Selon une autre caractéristique qui ne fait pas partie de l'invention, la cavité centrale comporte une partie cylindrique et un fond dont l'axe de la partie cylindrique est sensiblement colinéaire à l'axe longitudinal.

L'invention concerne également un appareil de préparation de boisson comportant un dispositif de chauffage tel que précédemment décrit.

On comprendra mieux les buts, aspects et avantages de la présente invention, d'après la description donnée ci-après de plusieurs modes particuliers de réalisation de l'invention présentés à titre d'exemples non limitatifs, en se référant aux dessins annexés dans lesquels :
- la figure 1 est une vue schématique d'un appareil comportant un dispositif de chauffage de liquide à l'ébullition selon un premier mode particulier de réalisation de l'invention,
- la figure 2 est une vue du dispositif de chauffage à l'ébullition de liquide de l'appareil de la figure 1,
- la figure 3 est une vue de dessus du dispositif de chauffage à l'ébullition de liquide de l'appareil de la figure 1,
- la figure 4 est une vue en coupe du dispositif de chauffage suivant le plan de coupe IV de la figure 3,
- la figure 5 est une vue du dispositif de chauffage à l'ébullition de liquide selon un mode particulier qui ne fait pas partie de l'invention,
- la figure 6 est une vue de dessus du dispositif de chauffage de l'appareil de la figure 5,
- la figure 7 est une vue en coupe du dispositif de chauffage suivant le plan de coupe VII de la figure 6,
- la figure 8 est un agrandissement d'un détail VIII de la figure 7.

Seuls les éléments nécessaires à la compréhension de l'invention ont été représentés. Pour faciliter la lecture des dessins les mêmes éléments portent les mêmes références d'une figure à l'autre.

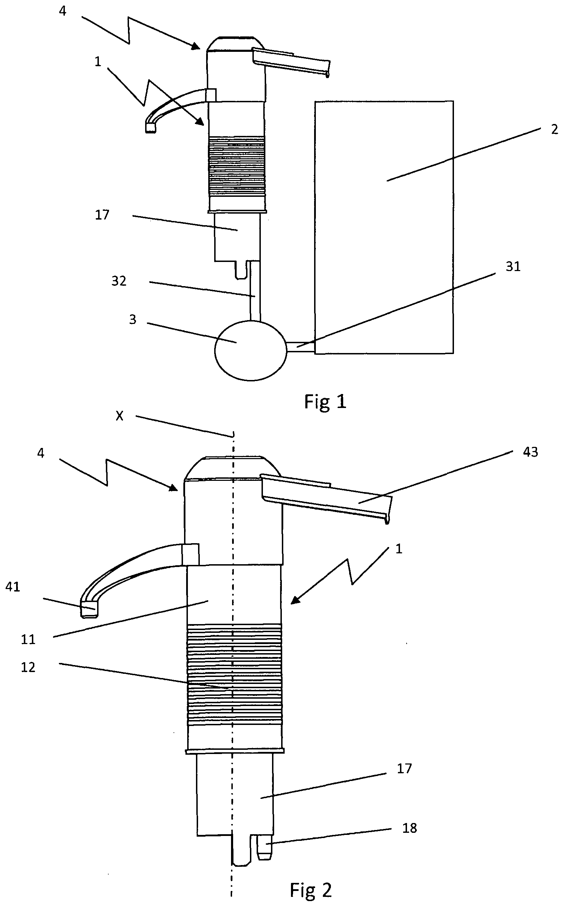

La figure 1 représente schématiquement un appareil électroménager de préparation de boisson comportant un dispositif de chauffage pour amener du liquide à l'ébullition comportant une chambre de chauffe 1 alimentée en liquide à partir d'un réservoir 2 par une pompe 3 électrique mettant le liquide sous pression et un circuit de distribution 4 du liquide, disposé directement en sortie de la chambre de chauffe 1, le circuit de distribution 4 étant alimenté en liquide par la chambre de chauffe 1.

Classiquement, le dispositif de chauffage repose par un support 17 sur une base non représentée formant la structure de l'appareil ; l'enveloppe externe de l'appareil permet de donner une forme ergonomique à l'appareil, étant principalement fixée sur cette base.

De manière classique, un dispositif de commande est intégré à l'appareil comportant un dispositif d'actionnement de type bouton de commande. La mise en route et le fonctionnement sont contrôlés au moyen du bouton de commande. Le bouton de commande est typiquement disposé sur la base ou bien sur l'enveloppe externe de l'appareil, pour être facilement accessible par l'utilisateur.

La pompe 3 permet le pompage du liquide du réservoir 2 vers la chambre de chauffe 1. Elle est typiquement disposée dans la partie basse de l'appareil afin de permettre un amorçage facilité en liquide. Elle conduit le liquide et le distribue par des connexions hydrauliques classiques 31, 32.

La connexion hydraulique 31 est disposée entre le réservoir 2 et la pompe 3. La connexion hydraulique 32 est disposée entre la pompe 3 et une partie tubulaire 18 d'admission du liquide.

De manière classique, la commande de la pompe par le dispositif de commande permet de réguler le débit entre 0,1 L/min et 2 L/min suivant les caractéristiques hydraulique de la pompe. De manière avantageuse, une valeur de débit de 0,5 L/min est proposée par défaut par le dispositif de commande à l'utilisateur.

Conformément à la figure 2, le dispositif de chauffage comporte avantageusement un corps cylindrique comprenant outre la partie support 17, la partie tubulaire 18 d'admission de liquide, ainsi que la chambre de chauffe 1 disposée en sortie de la partie tubulaire 18 d'admission de liquide. La partie tubulaire 18 d'admission de liquide est reliée à la chambre de chauffe 1 par des canaux d'amenée latéraux, non visibles sur les figures, permettant de conduire et répartir le liquide vers une zone de la chambre de chauffe 1 comportant classiquement une enveloppe 11 sur laquelle sont disposés des moyens de chauffe 12 dans laquelle circule le liquide mis en oeuvre par la pompe 3.

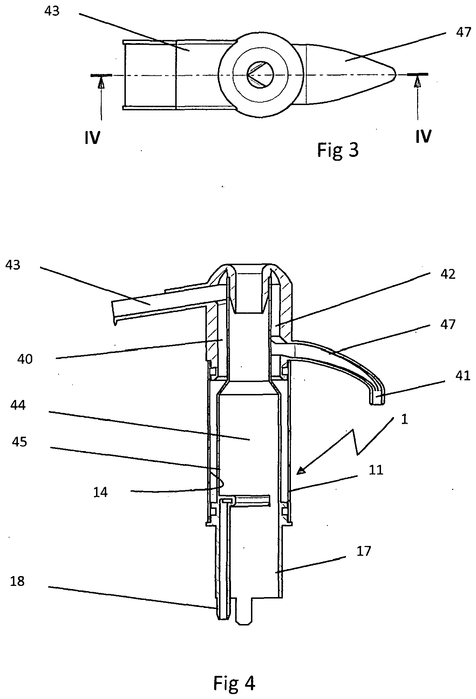

Le dispositif de chauffage comporte également au sein de l'enveloppe 11 de la chambre de chauffe 1 une cavité centrale 44 délimitée par une paroi cylindrique 45 visible sur la figure 4.

Cette cavité centrale 44 permet de contraindre la circulation du fluide dans un espace annulaire s'étendant entre la surface interne 14 de l'enveloppe 11 et la cavité centrale 44. La surface interne 14 de l'enveloppe 11 est la paroi chauffante pour le liquide.

Ceci permet de réduire le volume de liquide traité par la zone de chauffe. En réduisant typiquement l'épaisseur du film liquide au droit de la paroi chauffante, cette géométrie permet aussi d'améliorer les échanges thermiques avec cette paroi chauffante.

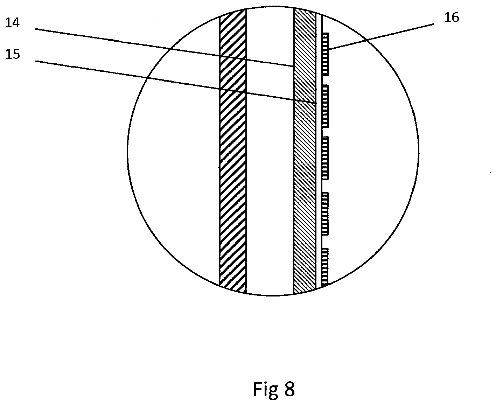

L'enveloppe 11 de la chambre de chauffe 1 est typiquement un tube cylindrique métallique, sur laquelle sont disposés les moyens de chauffe 12 comme des pistes sérigraphiées 16 visibles sur la figure 8. De manière préférentielle, ces moyens de chauffe 12 sont disposés sur une grande partie de la hauteur de la chambre de chauffe 1, au droit du volume liquide dès l'entrée du liquide dans la chambre de chauffe 1. La diffusion de la chaleur, émise par les moyens de chauffe 12 et transmise par conductivité thermique au travers du matériau de l'enveloppe 11, permet de chauffer l'ensemble du volume liquide sur toute la hauteur de l'enveloppe 11 y compris dans des zones non couvertes par les moyens de chauffe 12 et plus particulièrement par les pistes sérigraphiées 16.

Le dispositif de chauffage comporte également dans sa partie haute, coiffant la chambre de chauffe 1, le circuit de distribution 4. Ce circuit de distribution 4 est intégré dans une tête de distribution rapportée sur le tube cylindrique de la chambre de chauffe 1, cette tête de distribution comporte un volume 40 sur lequel différentes sorties de fluides sont disposées à savoir une conduite de retour 43 vers le réservoir 2 et une sortie de liquide comportant une canule 47 munie d'un orifice de sortie 41 en son extrémité. Ce volume 40 est créé par l'espace laissé entre le prolongement de la paroi cylindrique 45 au sein de la tête de distribution et la paroi de la tête de distribution. Ce volume 40 comporte également de manière avantageuse une zone interne servant de moyens d'échappement 42 entre la zone occupée par le liquide chauffé et la conduite de retour 43 ; cette zone permet de séparer la vapeur du fluide chauffé de sa phase liquide par un phénomène de gravité.

En cas de débit de liquide trop important ou de vaporisation intense créant une forte ébullition, ces moyens d'échappement 42 servent alors à conduire le trop plein de liquide amené en leur entrée afin qu'il se déverse dans le réservoir 2 par les moyens d'échappement 42 et la conduite de retour 43.

A la sortie de la zone couverte par le tube cylindrique de la chambre de chauffe 1, la canule 47 présente une forme adaptée pour faire s'écouler le liquide pour la distribution du liquide directement à l'utilisateur ou pour l'usage du liquide dans une zone de préparation d'un breuvage. Cette forme adaptée de la canule 47 présente une direction ou une courbure adéquate, classiquement inclinée ou arrondie vers le bas.

La longueur de cette canule 47 n'est pas une dimension critique, elle est adaptable au besoin de distribution du liquide ; cependant les dimensions, tant en longueur qu'en section débitante, sont adaptées au débit de liquide souhaité et contrôlé en entrée du dispositif en agissant sur la commande de la pompe. Classiquement, ces dimensions sont adaptées pour laisser passer, par déversement, un flot de liquide relativement laminaire afin d'obtenir une distribution de liquide qui ne présente pas de danger de projection pour l'utilisateur.

A titre indicatif, pour un débit désiré de 0,5 L/min en sortie de l'orifice 41, les dimensions en entrée de la canule 47, à savoir au niveau du volume sur lequel différentes sorties de fluides sont disposées, sont de 30 mm de largeur sur 7,5 mm de hauteur.

L'avantage de cette première variante de réalisation de l'invention est de permettre la distribution du liquide en haut de l'appareil. Cependant, cette capacité introduit un phénomène accru d'éclaboussures en cas de distribution directe dans le contenant présenté par l'utilisateur.

Le fonctionnement de l'appareil électroménager et son procédé d'utilisation suivant ce premier mode de réalisation vont maintenant être décrits.

Lorsque l'utilisateur souhaite réaliser le chauffage d'un fluide, typiquement de l'eau, il verse le fluide dans le réservoir 2. L'utilisateur actionne ensuite le bouton de commande qui permet l'actionnement de la pompe 3 par le dispositif de commande et la mise en route de l'alimentation électrique des moyens de chauffe 12. La pompe 3 ainsi actionnée fait circuler le fluide du réservoir 2 vers la chambre de chauffe 1.

Le fluide circule suivant le schéma hydraulique dans le circuit, sortant par l'orifice de sortie 41 où l'utilisateur le récupère à la température souhaitée dans un contenant adapté.

L'utilisateur arrête d'actionner le bouton de commande lorsqu'il a obtenu le volume de fluide désiré. En arrêtant l'actionnement du bouton de commande, le pompage et l'alimentation électrique des moyens de chauffe sont stoppés, arrêtant l'écoulement du fluide chauffé.

L'appareil reste alors prêt immédiatement pour l'utilisation suivante.

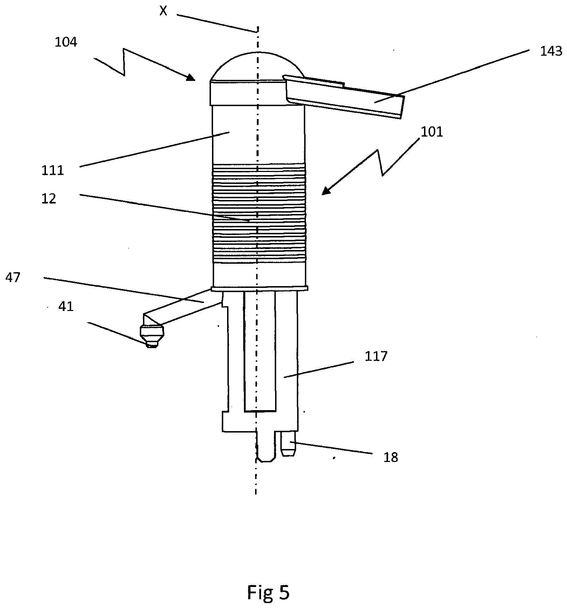

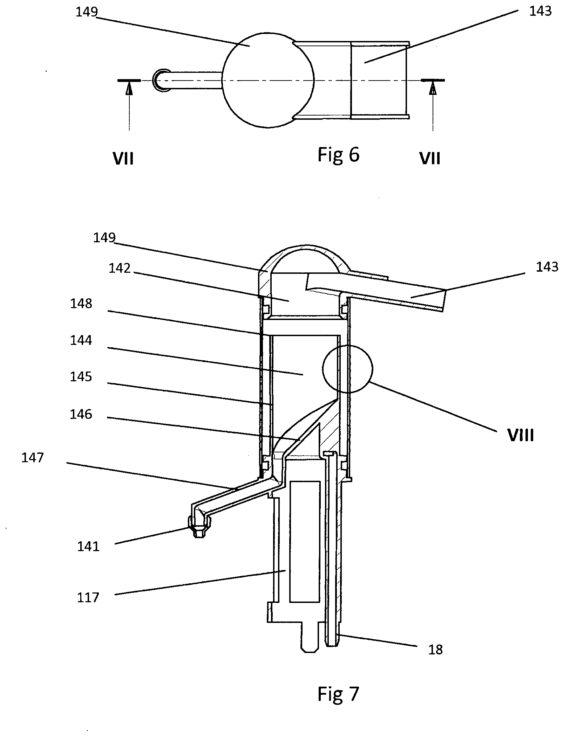

Les figures 5 à 7, illustrent le dispositif de chauffage selon une variante qui ne fait pas partie de l'invention dans laquelle l'appareil précédemment décrit aux figures 1 à 4 comporte maintenant un circuit de distribution 104 modifié. Suivant cette réalisation, la cavité centrale 144, disposée au sein de l'enveloppe 111 de la chambre de chauffe 101, fait maintenant partie intégrante du circuit de distribution 104 et permet de collecter provisoirement le liquide et de le déverser.

Conformément à ces figures, la paroi cylindrique 145 délimitant la cavité centrale 144 s'étend jusqu'à une arête supérieure 148 disposée au sein de l'enveloppe 111, au niveau de laquelle l'eau issue de l'espace annulaire de la chambre de chauffe 101 s'écoule par gravité dans la cavité centrale 144. La cavité centrale 144 comporte un fond 146 incliné en direction d'une ouverture débouchant dans une canule 147 s'étendant obliquement depuis la base de l'enveloppe 111 jusqu'à une extrémité munie d'un orifice 141, le fond incliné 146 et la canule 147 faisant préférentiellement partie intégrante du support 117 sur lequel repose le dispositif de chauffage.

Selon cette variante, le circuit de distribution 104 est en grande partie intégré dans la chambre de chauffe 101 et comporte cependant une tête de fermeture 149 rapportée sur le tube cylindrique de la chambre de chauffe 101 sur lequel une seule sortie est disposée à savoir une conduite de retour 143 vers le réservoir 2. Le volume intérieur de la tête de fermeture 149 sert ainsi de moyens d'échappement 142.

Dans cette variante de réalisation, le phénomène de séparation de la vapeur, à partir du mélange bi-phasique issu de l'échauffement du liquide, est amélioré par la présence de l'arête supérieure 148 dans le circuit de distribution 104, cette géométrie maintenant une zone singulière, dans le cheminement du fluide, favorisant la séparation des phases du fluide par un changement brutal de direction du liquide. En effet, le liquide est guidé verticalement vers le haut jusqu'au droit de l'arête 148, puis il se déverse verticalement vers le bas en sortie de cette arête 148.

En cas de débit de liquide trop important, le liquide doit d'abord remplir la cavité centrale 144 qui sert de volume tampon. L'effet tampon du remplissage de la cavité centrale 144 n'a pas d'effet sur la température du liquide. En effet, le liquide est maintenu dans une zone intégrée à la chambre de chauffe 111 et de ce fait le liquide est maintenu au chaud. Dans le cas d'un débit encore plus important, le surplus de liquide est traité via les moyens d'échappement 142 qui servent alors à conduire le trop plein de liquide amené en leur entrée afin qu'il se déverse dans le réservoir 2 par les conduites de retour 143.

L'avantage de cette variante est de permettre la distribution du liquide en partie basse de l'appareil. Ceci réduit le phénomène d'éclaboussures en cas de distribution directe dans le contenant présenté par l'utilisateur. Cependant, cette configuration limite la vitesse de distribution du liquide qui est momentanément stocké dans la cavité centrale 144. De plus, l'utilisation de cette configuration est principalement à usage de distribution directe du liquide à l'utilisateur, par la position basse de la sortie qui permet difficilement un écoulement par gravité dans une partie plus haute d'un appareil de préparation de breuvage.

Le fonctionnement de l'appareil électroménager et son procédé d'utilisation suivant ce deuxième mode de réalisation vont maintenant être décrits.

La mise en route de l'appareil par l'utilisateur est réalisée de manière identique au premier mode de réalisation.

Le fluide circule suivant le nouveau schéma hydraulique dans le circuit, sortant par l'orifice de sortie 141 où l'utilisateur le récupère à la température souhaitée dans un contenant adapté. Cependant, de part l'effet tampon de la cavité centrale 144, un délai faible est introduit entre le moment où l'utilisateur actionne le bouton de commande et le premier écoulement du liquide en sortie de l'appareil par l'orifice de sortie 141.

L'utilisateur arrête d'actionner le bouton de commande lorsqu'il a obtenu le volume de fluide désiré. En arrêtant l'actionnement du bouton de commande, le pompage et l'alimentation électrique des moyens de chauffe sont stoppés, arrêtant l'écoulement du fluide chauffé.

Cependant, dans ce mode de réalisation, l'écoulement du liquide se prolonge le temps de vider la quantité de liquide contenue dans la cavité centrale 144.

L'appareil reste alors prêt immédiatement pour l'utilisation suivante.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Dispositif de chauffage pour amener à l'ébullition un liquide comportant une chambre de chauffe (1) alimentée en liquide à partir d'un réservoir (2) par une pompe (3) électrique et un circuit de distribution (4) dudit liquide disposé directement en sortie de ladite chambre de chauffe (1), ledit circuit de distribution (4) étant alimenté en liquide par ladite chambre de chauffe (1) **caractérisé en ce que** ledit circuit de distribution (4) présente une forme adaptée pour que le liquide présent dans ledit circuit de distribution (4) se déverse en intégralité par un orifice de sortie (41) dudit circuit de distribution (4) lors de l'arrêt de la pompe (3) et **en ce que** ledit circuit de distribution (4) est disposé au-dessus de ladite chambre de chauffe (1), ledit circuit de distribution (4) comporte des moyens de retour (43) dudit liquide et/ou de ladite vapeur produite au cours de l'ébullition dudit liquide, vers ledit réservoir (2).

2. Dispositif selon la revendication 1, **caractérisé en ce que** ledit déversement est fait par gravité.

3. Dispositif selon l'une quelconque des revendications 1 à 2, **caractérisé en ce que** ladite chambre de chauffe comporte une enveloppe (11) sur laquelle sont rapportés des moyens de chauffe (12).

4. Dispositif selon la revendication 3, **caractérisé en ce que** ladite enveloppe (11) est cylindrique et présente un axe longitudinal (X).

5. Dispositif selon la revendication 4, **caractérisé en ce que** ladite enveloppe (11) est disposée verticalement suivant son axe longitudinal (X).

6. Dispositif selon la revendication 3 à 5, **caractérisé en ce que** ladite enveloppe (11) comprend une surface interne (14) et une surface externe (15) et que lesdits moyens de chauffe (12) sont rapportés sur ladite surface externe (15) de ladite enveloppe (11).

7. Dispositif selon l'une quelconque des revendications 3 à 6, **caractérisé en ce que** lesdits moyens de chauffe (12) comportent une piste sérigraphiée (16).

8. Dispositif selon l'une quelconque des revendications 1 à 7, **caractérisé en ce que** ledit circuit de distribution (4) comporte des moyens d'échappement (42) de la vapeur produite au cours de l'ébullition dudit liquide.

9. Dispositif selon la revendication 8, **caractérisé en ce que** lesdits moyens d'échappement (42) sont disposés au-dessus de ladite chambre de chauffe (1).

10. Dispositif selon la revendication 1, **caractérisé en ce que** l'écoulement dudit liquide par lesdits moyens de retour (43) se fait par gravité.

11. Appareil de préparation de boisson comportant un dispositif de chauffage selon l'une quelconque des revendications 1 à 10.

## Patentansprüche

1. Heizvorrichtung, um eine Flüssigkeit zum Kochen zu bringen, mit einer Heizkammer (1), einem Behälter (2), einer elektrischen Pumpe (3) und einem Verteilungskreislauf (4), wobei der Heizkammer (1) aus dem Behälter (2) über die elektrische Pumpe (3) Flüssigkeit zugeführt wird und der Verteilungskreislauf (4) dieser Flüssigkeit direkt am Ausgang dieser Heizkammer (1) angeordnet ist, wobei diesem Verteilungskreislauf (4) über diese Heizkammer (1) Flüssigkeit zugeführt wird, **dadurch gekennzeichnet, dass** dieser Verteilungskreislauf (4) eine geeignete Form aufweist, damit die in diesem Verteilungskreislauf (4) vorhandene Flüssigkeit beim Anhalten der Pumpe (3) vollständig über eine Austrittsöffnung (41) dieses Verteilungskreislaufes (4) abfließt, dass dieser Verteilungskreislauf (4) über dieser Heizkammer (1) angeordnet ist, und dass dieser Verteilungskreislauf (4) Mittel zur Rückführung (43) dieser Flüssigkeit und/oder des bei dem Erhitzen dieser Flüssigkeit entstandenen Dampfes zum Behälter (2) umfasst.

2. Vorrichtung nach Anspruch 1, **dadurch gekennzeichnet, dass** dieses Abfließen durch Schwerkraft erfolgt.

3. Vorrichtung nach einem der Ansprüche 1 bis 2, **dadurch gekennzeichnet, dass** diese Heizkammer eine Ummantelung (11) umfasst, auf der Heizmittel (12) angeordnet sind.

4. Vorrichtung nach Anspruch 3, **dadurch gekennzeichnet, dass** diese Ummantelung (11) zylindrisch ist und eine Längsachse (X) aufweist.

5. Vorrichtung nach Anspruch 4, **dadurch gekennzeichnet, dass** diese Ummantelung (11) entlang ihrer Längsachse (X) vertikal angeordnet ist.

6. Vorrichtung nach Anspruch 3 bis 5, **dadurch gekennzeichnet, dass** diese Ummantelung (11) eine Innenfläche (14) und eine Außenfläche (15) umfasst und dass die Heizmittel (12) auf dieser Außenfläche (15) der Ummantelung (11) angeordnet sind.

7. Vorrichtung nach einem der Ansprüche 3 bis 6, **dadurch gekennzeichnet, dass** diese Heizmittel (12) eine Siebdruck-Spur (16) aufweisen.

8. Vorrichtung nach einem der Ansprüche 1 bis 7, **dadurch gekennzeichnet, dass** dieser Verteilungskreislauf (4) Mittel zum Ausströmen (42) des Dampfes umfasst, der bei dem Erhitzen dieser Flüssigkeit entsteht.

9. Vorrichtung nach Anspruch 8, **dadurch gekennzeichnet, dass** die Mittel zum Ausströmen (42) über dieser Heizkammer (1) angeordnet sind.

10. Vorrichtung nach Anspruch 1, **dadurch gekennzeichnet, dass** das Abfließen dieser Flüssigkeit über die Mittel zur Rückführung (43) durch Schwerkraft erfolgt.

11. Gerät zur Zubereitung von Getränken mit einer Heizvorrichtung gemäß einem der Ansprüche 1 bis 10.

## Claims

1. Heating device to boil a liquid comprising a heating chamber (1), a tank (2), an electric pump (3) and a distribution circuit (4), the heating chamber (1) being supplied with liquid from the tank (2) by the electric pump (3) and the circuit (4) for distributing said liquid being arranged directly at the outlet of said heating chamber (1), said distribution circuit (4) being supplied with liquid by said heating chamber (1), **characterised in that** said distribution circuit (4) has a shape adapted so that the liquid present in said distribution circuit (4) flows entirely through an outlet hole (41) of said distribution circuit (4) when the pump (3) stops, **in that** said distribution circuit (4) is arranged above said heating chamber (1) ; and **in that** said distribution circuit (4) comprises means (43) for returning said liquid and/or said steam produced when boiling said liquid to said tank (2)

2. Device according to claim 1, **characterised in that** said flow takes place by gravity.

3. Device according to claim 1 or 2, **characterised in that** said heating chamber comprises a casing (11) to which the heating means (12) are attached.

4. Device according to claim 3, **characterised in that** said casing (11) is cylindrical and has a longitudinal axis (X).

5. Device according to claim 4, **characterised in that** said casing (11) is arranged vertically along its longitudinal axis (X).

6. Device according to any one of claims 3 to 5, **characterised in that** said casing (11) comprises an inner surface (14) and an outer surface (15) and **in that** said heating means (12) are attached to said outer surface (15) of said casing (11).

7. Device according to any one of claims 3 to 6, **characterised in that** said heating means (12) comprise a screen-printed track (16).

8. Device according to any one of claims 1 to 7, **characterised in that** said distribution circuit (4) comprises means (42) to allow the steam produced when boiling said liquid to escape.

9. Device according to claim 8, **characterised in that** said escape means (42) are arranged above said heating chamber (1).

10. Device according to claim 1, **characterised in that** the flow of said liquid by said return means (43) takes place by gravity.

11. Beverage preparation appliance comprising a heating device according to any one of claims 1 to 10.
